# EUROPEAN PATENT SPECIFICATION

(11) **EP 0 671 844 B1**
(45) Date of publication and mention of the grant of the patent: **22.09.1999**
(21) Application number: 95106953.3
(22) Date of filing: 06.05.1991
(51) Int. Cl.: H04N 1/40

(54) **Apparatus and method for grey level printing using a binary architectured printhead**
Vorrichtung und Verfahren für Grauwerkdruck unter Anwendung eines Druckkopfes mit binärer Architektur
Appareil et procédé d'impression de niveaux de gris utilisant une tête d'impression à architecture binaire

(30) Priority: 10.05.1990 US 521511; 07.11.1990 US 609868
(43) Date of publication of application: 13.09.1995
(62) Divisional of application: 91909353.4
(73) Proprietor: EASTMAN KODAK COMPANY, Rochester, New York 14650 (US)
(72) Inventor: Ng, Yee S., c/o Eastman Kodak Co., Rochester, New York 14650-2201 (US); Yeh, Hurjay, c/o Eastman Kodak Co., Rochester, New York 14650-2201 (US); Basile, Joseph, c/o Eastman Kodak Co., Rochester, New York 14650-2201 (US)
(74) Representative: Blickle, K. Werner, Dipl.-Ing.

(56) References cited:
- EP-A- 0 375 431
- WO-A-88/10042
- US-A- 4 525 729
- US-A- 4 855 760
- JOURNAL OF IMAGING TECHNOLOGY, vol. 12, no. 5, 31 October 1986 SPRINGFIELD,US, pages 296-299, ABIKO I. ET AL 'high printing quality LED printheads'

## Description

### BACKGROUND OF THE INVENTION

### 1. Field of the Invention

The present invention relates to non-impact printing apparatus for recording using printheads having a plurality of recording elements such as a light-emitting diodes (LEDs) or the like.

### 2. Brief Description of the Prior Art

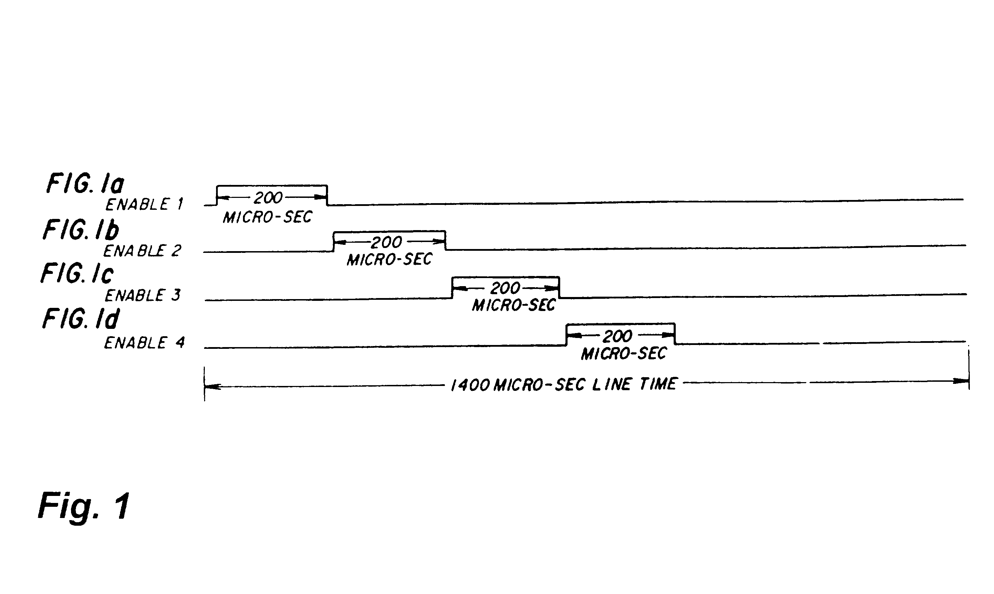

In order to reduce the cost of non-impact printheads such as LED printheads, modifications have been proposed to the design of the printheads to reduce the thermal load and current supply requirements of the printhead. In reducing the thermal load on a printhead, savings ensue by reducing the need for more expensive heat sinks and problems associated with nonuniformities in light emissions due to thermal gradients on the printhead may be avoided or reduced. Reduction in current supply requirements reduce the cost of the power supply as well as printhead electrical inter-connects. In accordance with one such design a binary architectured printhead is provided with separate enable lines so that different segments of LED's may be enabled at different times during a time period for recording a line of pixels (picture elements). In this printhead all the LED's are arranged in a single straight line across the printhead. A line time for recording a row of pixels in a main scanning direction for a typical use with a photoconductive recording element is approximately 1400 microseconds (ms) (see FIG. 1) for an eight-page per minute printer. As noted in FIG. 1, the LED's to be enabled for recording during a particular line period are enabled in staggered fashion so that substantially no overlap results in enabling time. In FIG. 1, the exposure timing is shown for an LED printhead of 300 dots per inch (dpi) or 11.81 dots per mm which uses four independent enable lines for four printhead segments of LED's. As the requirement for exposure time per line at 300 dpi in this case is only 200 ms (with a system requiring 3 milliamps per pixel) and the line time for each 1/300th of an inch (1.31 x 10⁻³cm) line spacing is as noted above 1400 ms one can spread out the four strobe enable pulses to have 200ms exposure durations for each segment without overlapping the exposure times. This concept then reduces the current supply requirement for the printhead.

It is also known to use binary architectured printheads for grey scale recording. In grey scale recording, pixels are created of different densities whereas in binary recording, a pixel is either created or not created. In a binary architectured printhead as the term is used herein, data for determining whether or not a recording element is turned on or off for its next enablement period is determined by a single image data bit. Known types of binary architectured printheads include driver chips that are provided with shift registers and latches for storing a single data bit for driving each LED for producing a single flash of light. The driver chips conventionally also include current driving circuitry for driving current to those LED's to be flashed during a period of time controlled by a strobe pulse timed by a suitable clock or by the presence of a data bit stored in a latch for driving the LED. While the LED is being driven or flashed in response to a data bit stored in the latch, a shift register on the driver chip may be receiving the next data bit for driving respective LED's for the next flash. Compare this with a grey level printer architecture, an example of which is illustrated in US-A-4,750,010, (FIG. 6 thereof) wherein multiple lines for carrying data are required for each LED and multiple data bits are stored on the printhead for each LED before enabling the LED for its next enablement period. One reason for using a binary architectured printhead for grey level recording is that such printers have less data lines and registers for storing data and thus require fewer bonding pads and thereby are cost efficient to manufacture. Additionally, there is demand for such printheads by those incorporating same for use in binary printing applications as well as grey level printing applications, so manufacturing efficiencies based on production quantities may be passed along from the manufacturer of the printhead to the manufacturer of a printer incorporating this printhead. Ultimately, these savings can be passed along to purchasers of the printers.

An example of a binary architectured printhead that is used for grey level recording is described in US-A-4,525,729. As taught in this patent, a multibit binary-weighted digital word representing a grey level pixel to be printed is shifted to a printhead one bit at a time so that a single bit for each LED is stored on the printhead just prior to enablement of the LED. An exposure clock signal enables those LED's having a respective data bit for a time period related to the binary weight of that data bit. As successive bits are shifted to the printhead, the time durations of the clock pulses changes accordingly until the pixel is printed in accordance with the appropriate digital word representing the pixel's grey level value. Where a pixel is represented by a six-bit digital word, six time periods of exposure are possible and a 63 levels of grey, including white, are realizable.

As disclosed in US-A-4,525,729 multibit image data is extracted from a video source and stored in a buffer. Data from the buffer is then input to a compensation look-up table and the compensated data is subject to reformatting for storage in a different buffer. A problem associated with the above where such correction and adjustment is required is the need for memory for storing the data in various stages.

It is an object of the invention therefore to minimize the memory requirements for manipulating data prior to sending same to a printhead.

### SUMMARY OF THE INVENTION

The above and other objects which will become apparent in reading the specification below are realized by a non-impact recording apparatus in accordance with the apparatus of Claim 1.

In still another aspect of the invention, the invention is further realized in a method for formatting data to a non-impact printhead for recording the printhead having a plurality of recording elements, the method being in accordance with that of Claim 9.

### BRIEF DESCRIPTION OF THE DRAWINGS

FIG. 1 is a timing diagram illustrating strobe pulse signals on a binary architectured printhead of the prior art operating as a binary printer and during a sub-line recording;
FIG. 2 is a schematic of a grey level printer apparatus made in accordance with the invention;
FIG. 3 is a block diagram of circuitry of a binary architectured printhead of the prior art and used in the printer apparatus of FIG. 2;
FIGS. 4a and 4b are timing diagrams illustrating strobe pulse signals on the binary architectured printhead of FIG. 3 but illustrating operation as a grey level printer in accordance with the invention during eight sub-lines of recording;
FIG. 5 is a block diagram of a circuit for formatting data to the printhead of FIG. 2 for operation in accordance with the invention; and
FIG. 6 is a diagram illustrating operation of the process look-up table in FIG. 5.

### DETAILED DESCRIPTION OF THE PREFERRED EMBODIMENTS

The apparatus of the preferred embodiment will be described in accordance with an electrophotographic recording medium. The invention, however, is not limited to apparatus for creating images on such a medium, as other media such as photographic film, thermal sensitive, etc., may also be used with the invention.

Because electrophotographic reproduction apparatus are well known, the present description will be directed in particular to elements forming part of, or cooperating more directly with, the present invention. Apparatus not specifically shown or described herein are selectable from those known in the prior art.

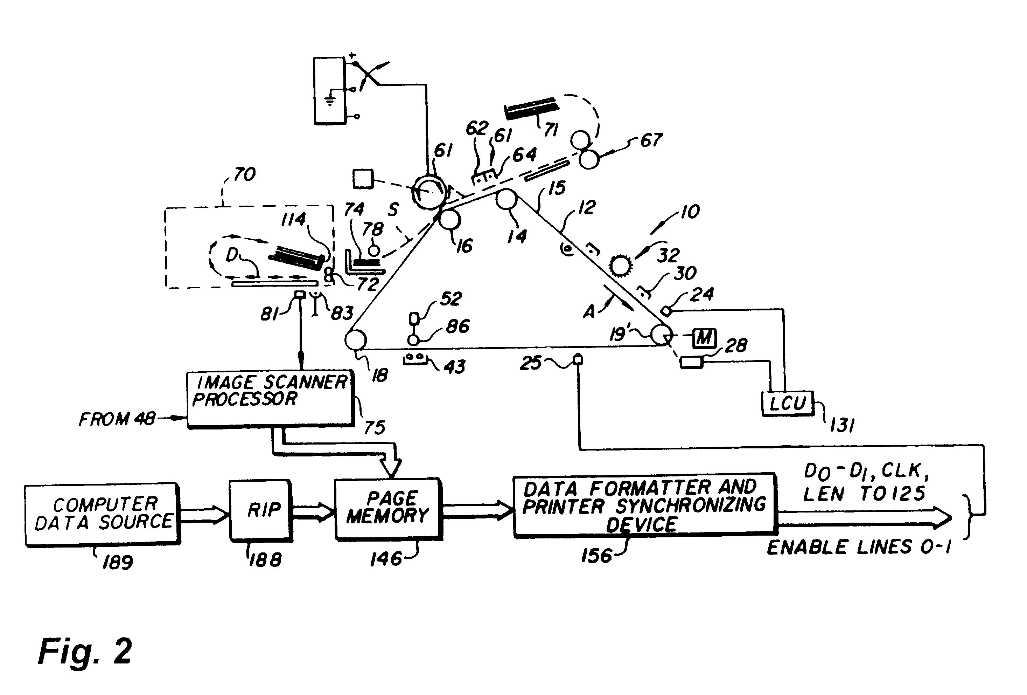

With reference now to FIG. 2, an electrophotographic reproduction apparatus 10 includes a recording medium or photoreceptor such as a photoconductive web 12 or other photosensitive medium that is trained about four transport rollers 14, 16, 18 and 19, thereby forming an endless or continuous web. Roller 19 is coupled to a driver motor M in a conventional manner. Motor M is connected to a source of potential when a switch (not shown) is closed by a logic and control unit (LCU) 131. When the switch is closed, the roller 19 is driven by the motor M and moves the web 12 in a clockwise direction as indicated by arrow A. This movement causes successive image areas or image frames of the web 12 to sequentially pass a series of conventional electrophotographic work stations of the reproduction apparatus.

For the purposes of this disclosure, several work stations are shown along the web's path. These stations will be briefly described.

First, a charging station 30 is provided at which the photoconductive surface 15 of the web 12 is sensitized by applying to such surface a uniform electrostatic primary charge of a predetermined voltage. The output of the charger may be controlled by a grid connected to a programmable power supply (not shown). The supply is, in turn, controlled by the LCU 131 to adjust the voltage level Vo applied onto the surface 15 by the charger 30.

At an exposure station an electrostatic image is formed by modulating the primary charge on an image area of the photoconductive surface with selective energization of point-like radiation sources in accordance with signals provided by a data source to be described. The point-like radiation sources are supported in a printhead 125 also to be described in more detail below.

A development station 43 includes developer which may consist of iron carrier particles and electroscopic toner particles with an electrostatic charge opposite to that of the latent electrostatic image. Developer is brushed over the photoconductive surface of the web 12 and toner particles adhere to the latent electrostatic image to form a visible toner particle, transferable image. The development station may be of the magnetic brush type with one or two rollers. Alternatively, the toner particles may have a charge of the same polarity as that of the latent electrostatic image and develop the image in accordance with known reversal development techniques.

The apparatus 10 also includes a transfer station 61 shown with a pair of corona chargers 62, 64 at which the toner image on web 12 is transferred in register to a copy sheet S; and a cleaning station 32, at which the photoconductive surface of the web 12 is cleaned of any residual toner particles remaining after the toner images have been transferred. After the transfer of the unfixed toner images to a copy sheet S, such sheet is transported to a heated pressure roller fuser 67 where the image is fixed to the copy sheet S and the sheet is then transported to a tray 71. Suitable means such as a transfer drum 61' may be provided for duplex operation in accordance with known technigues.

As shown in FIG. 2, a copy sheet S is fed from a supply 74 by driver roller 78, which then urges the sheet to move forward onto the web 12 in alignment with a toner image.

To coordinate operation of the various work stations with movement of the image areas on the web 12 past these stations, the web has a plurality of indicia such as perforations along one of its edges. These perforations generally are spaced equidistantly along the edge of the web 12. At a fixed location along the path of web movement, there is provided suitable encoding means 24 for sensing web perforations. This sensing produces input signals into the LCU 131 which has a digital computer, preferably one or more microprocessors. The LCU has a stored program responsive to the input signals for sequentially actuating, then de-actuating, the work stations as well as for controlling the operation of many other machine functions. Additional encoding means 28 may be provided as known in the art for providing more precise timing signals for control of the various functions of the apparatus 10 as will be described below.

Programming of a number of commercially available microprocessors is a conventional skill well understood in the art. This disclosure is written to enable a programmer having ordinary skill in the art to produce an appropriate control program for the one or more microprocessors used in this apparatus. The particular details of any such program would, of course, depend on the architecture of the designated microprocessor(s).

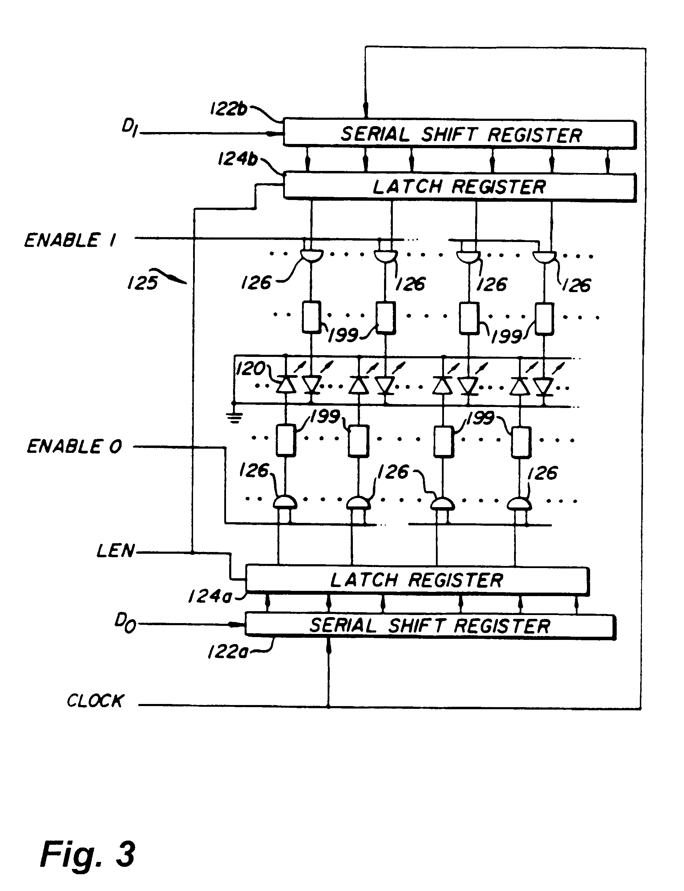

With reference to both FIGS. 2 and 3, the printhead 125, as noted, is provided with a multiplicity of energizable point-like radiation sources 120, preferably light-emitting diodes (LED's). Optical means (not shown) may be provided for focusing light from each of the LED's onto the photoconductive surface. The optical means as noted above preferably comprises an array of optical fibers such as sold under the name Selfoc, although other optical means such as lenses may be used. Due to the focusing power of the optical means, a row of emitters will be imaged on a respective transverse line on the recording medium.

With reference to FIG. 3, the printhead 125 comprises a suitable stationary support with a series of LED chip arrays mounted thereon. As is well known, each of the LED chip arrays includes, for example, 96 LED's arranged in a single row. These chips are also arranged end-to-end in a row and where twenty-seven LED chip arrays are so arranged, the printhead will extend across the width of the web 12 and include 2592 LED's arranged in a single row. To each side of this row of LED's there may be provided, for example, twenty-seven identical driver chips. Each of these driver chips include circuitry for addressing the logic associated with each of 48 LED's to control whethsr or not each of the LED's should be energized as well as current driver circuitry 199 to control the level of current to each of the LED's controlled by that driver chip. In this example, two driver chips are thus associated with each LED chip array. Each of the two driver chips will be coupled for driving of alternate LED's, i.e., one of the driver chips will drive the even numbered LED's and the other driver chip will drive the odd numbered LED's in a particular LED chip array. Thus, one driver-chip will drive the 48 odd numbered LED's of the 96 LED's in the array and the other driver chig will drive the 48 even numbered LED's of these 96 LED's. Only some of the LED's are illustrated in FIG. 3, it being understood that many more LED's are present. The driver chips on each side of the printhead are suitably coupled together in groups to serially shift data between those in a group. Thus, shift register 122a represents the combination of the shift registers in 27 driver chips.

As may be noted in FIG. 2, the original document sheet to be copied D forms a part of a multisheet document supported in a recirculating feeder tray 70. A vacuum drive roller (not shown) under control of the LCU feeds the document D face down through metering rollers 72 which are adapted to feed the document D past an image scanning head 81 formed of say a conventional CCD array and provide signals to a conventional image scanner processor 75 indicative of the movement of the sheet. A lamp 83 provides a narrow line of illumination, upon the document D and reflections thereof off the document D are sensed by the image scanning array to provide signals indicative of density information thereon. This output of the image scanner array is also fed to the image scanner processor 75.

The data representing the scanned image on document D is processed by the image scanner processor in accordance with well known techniques and the output thereof is fed over to a page memory 146 wherein a page of rasterized data to be printed is stored. The printer apparatus may also include a raster image processor (RIP) 188 that rasterizes data from a computer 189 or word processor. This rasterized data represents the grey level of each pixel to be recorded and, in the case of a color copier or printer, may contain data bits indicating the color that it is to be printed in. This data, however, must be modified before printing so that it is modified for the particular process conditions of this printer and for the characteristics of the particular LED's that will be used to record the particular pixels of data.

In response to pulses from encoders 24 and 28 identifying a new image frame on a photosensitive web, the LCU 131 provides an output signal via a memory controller to the Page Memory to remove one line of data. This data is fed to a printer output device 156 for formatting the data and synchronizing the operation thereof. This output device is illustrated by the data formatter and printer synchronizing device 156.

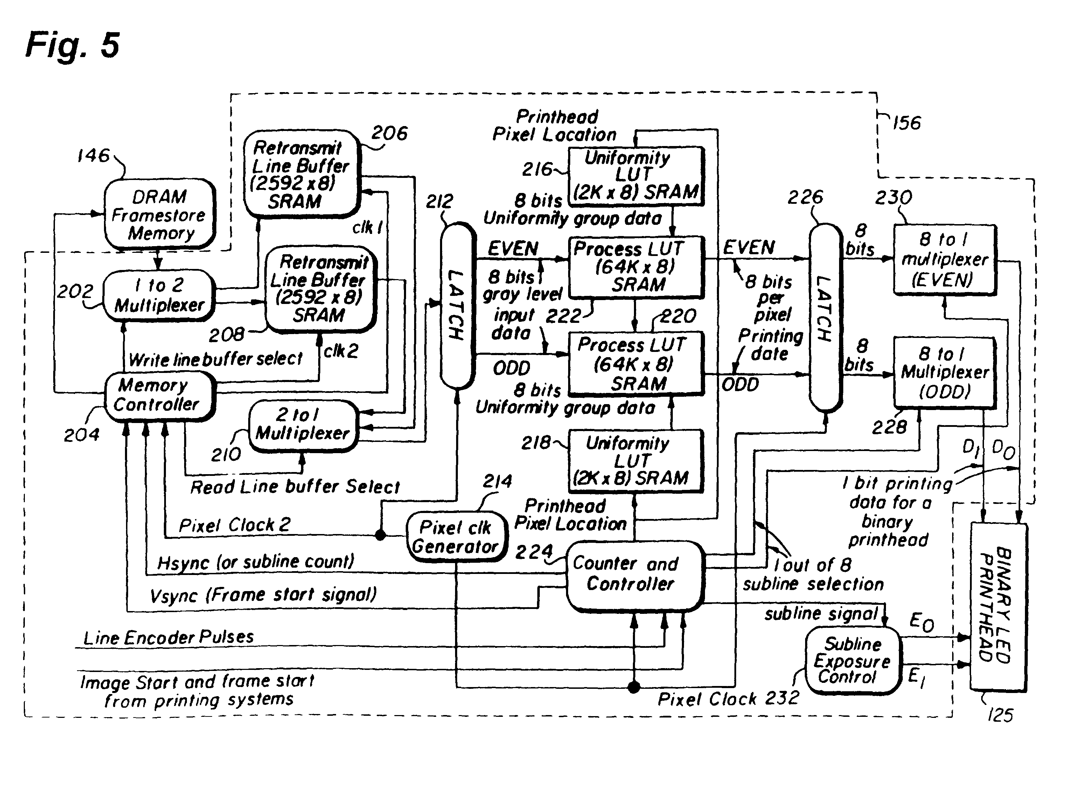

With reference now to FIG. 5, the LCU may be programmed to remove rasterized data from the page or framestore memory 146 by "pulling" two 8-bit words at a time representing grey level data for two pixels.

This rasterized data represents information in multibit digital form for each pixel. But where the data is required to be modified to the specific printer, further modifications to the data will be made as discussed below before sending same to the printer.

This data is stored in one of two re-transmit line buffers 206,208 in response to signals from a memory controller 204. A multiplexer 202 controls which of the buffers is operative to store the particular line of pixel data. Eventually, one line of pixel data is stored in the buffer, say buffer 206, and the next line of data is then stored in the other buffer 208. The storage of the data in each of the buffers is such that they are in an order that they can be clocked out last pixel first, i.e., the two 8-bit words for the last and the next to the last LED's on the printhead are clocked out first, while the two 8-bit words for the first and second LED's of the printhead are clocked out last. A second multiplexer 210 controls which of the line buffers outputs are to be transmitted to a 16-bit latch 212. Clock pulses (clk 1, clk 2) for respectively clocking out the data from the buffers 206, 208 may be synchronized with the encoder of the printhead while the clock pulses for loading the data into the buffers are synchronized or controlled by a system clock. This approach allows data movement directly to the printhead in synchonization with the movement of web 12 which may vary due to changes of speed; i.e., flutter, etc. When the latch 212 receives the two 8-bit signals, it is then shifted to the output thereof wherein each 8-bit word provides an address in a corresponding process look-up table 220, 222 of a 64Kx8 SRAM. A further respective 8-bit address is provided to each look-up table 220, 222 by a uniformity look-up table 216, 218 which defines the brightness characteristic for the particular LED that is to print that particular pixel. Note in the example provided herein that odd and even pixel data are handled simultaneously with the data representing the adjacent odd and even pixels. A pixel clock generator 214 provides pulses to a counter and controller 224. The output of the counter 224 represents the pixel location of a particular pair of adjacent LED's. The initial count may represent simultaneously the last odd and even LED's. This count is then input into each of two uniformity look-up tables 216, 218 which stores correction data for that particular LED of that pair as an 8-bit word representing 256 levels of correction. The two 8-bit outputs of the two process look-up tables 220, 222 are then latched in latch 226.

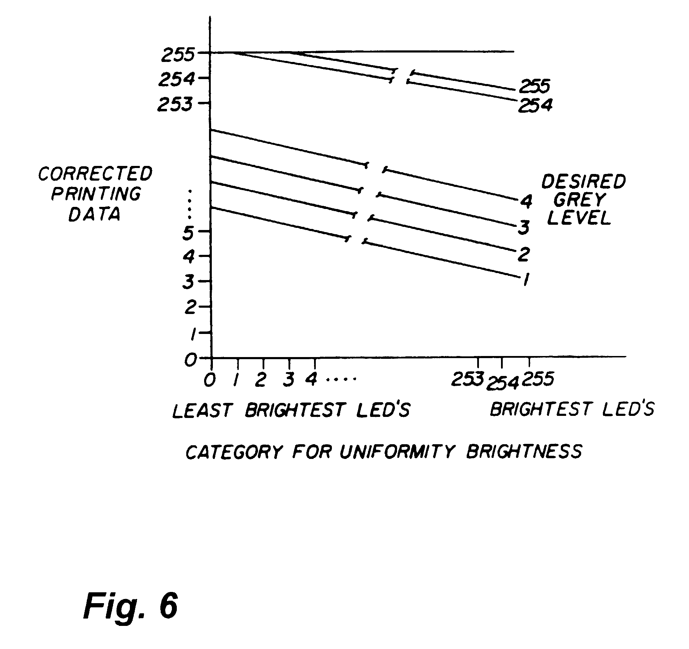

As may be seen in FIG. 6, which represents a graphical explanation of the contents of the process look-up tables 220,222, the 8-bit word representing uniformity correction can represent a grading of the LED's into 256 categories according to their respective brightness levels. As is known even though the same current be driven through each LED, LED's respond differently and their light outputs vary. Some may be brighter than others with the very brightest being assigned category 255 and the least brightest being assigned category 0. Each 8-bit data signal from latch 212 identifies which desired grey level line is to be used to determine the corrected printing data. The 8-bit corrected pixel print data is then known once the category for the particular LED is identified and the grey level for the uncorrected grey level data is known.

The table 222 provides a reasonable approximation for correction. In theory, the desired grey level of exposure, Cⱼ, for grey level "j" should be in accordance with the following equation Bᵢ x Tᵢⱼ = Cⱼ where Bⱼ is the brightness of a particular LED "i" and Tᵢⱼ is the required exposure time for an LED of brightness Bᵢ to form an exposure Cⱼ. The grey levels Cⱼ may be noted empirically by recording with each LED and identifying the time period Tᵢⱼ required to record each of the various grey levels. The LED's can then be grouped into appropriate categories of brightness and a look-up table memory created to approximate the print duration by assigning an 8-bit corrected printing data signal for each grey level for each of the particular categories or groups of brightness to which LED's have been assigned.

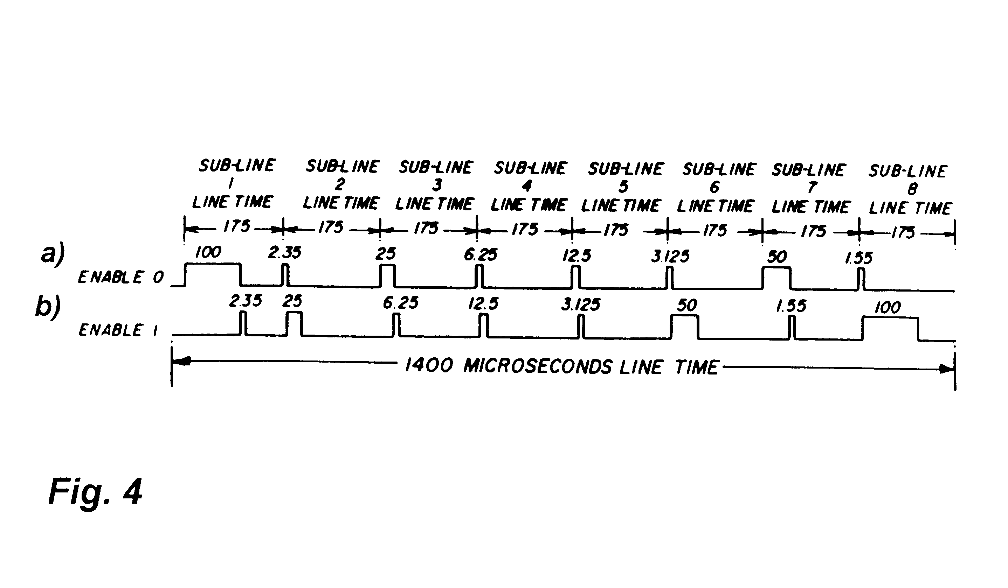

The two 8-bit words latched by the latch 226 represent the corrected exposure times for one odd and one even LED for recording a single pixel by each. Each of the latched 8-bit words are output from the latch 226 to a respective 8 to 1 multiplexer 228,230 which selects one of the 8-bits from each word in accordance with a signal from the counter and controller 224. For each subline a different one of the 8-bits is selected by each of the 8 to 1 multiplexers 228,230 in accordance with a change in a respective 3-bit count signal from the counter and controller 224. For each subline, the re-transmit line buffer 206,208 transmits the same line of data in 16-bit word increments and this entire line of pixel data is re-transmitted eight times with the grey level input data for each pixel being corrected each time and transmitted to the latch 226. Since the enable lines (see FIGS. 3 and 4a,b) have a different sequence of exposure, the signals from the counter and controller 224 to the respective 8 to 1 multiplexer 228,230 will be different to select a different order of bits from the odd and even pixel data.

Each of these one-bit data signals is carried over respective lines, indicated in FIG. 3 by data lines D₀-D₁, and is fed under clock control to an appropriate serial data shift register 122a, 122b until 2592 bits of data, one for each of the LED's, is stored in the serial registers for the odd and even numbered LED's. Upon a latch enable (LEN) signal from the LCU, the data is shifted in parallel to latch registers 124a, 124b, enabling the next sub-line of data to be introduced into the serial shift registers 122a, 122b. In response to an encoder pulse or other suitable pulse indicating the timing for firing the next sub-line for printing, the counter 224 provides a series of timed strobe signals over lines Enable 0 and Enable 1.

The strobe signals are provided by the counter and controller 224 as are a series of sublines dividing each line into equal time periods through generation of Hsync pulses, over the enable lines Enable 0, Enable 1 as shown in FIG. 8. It will be noted from this timing diagram that a relatively long pulse such as the l00ms pulse on strobe line Enable 0 (sub-line 1) is followed by a shorter duration pulse on strobe line Enable 1 during sub-line #1. It may be noted that the pulse durations are generally binary weighted in time duration with the lowest exposure durations being increased to avoid exposure times that are too short for activating LED's which have minimum rise time and fall time requirements.

In the embodiment disclosed in the copending Patent Application 91 909 353.4 (see FIGS. 2-5 thereof), there is disclosed the use of 4 enable lines wherein during a subline of exposure, the even-numbered LED's on the first half of the printhead are enabled, then the even-numbered LED's on the second half of the printhead, then the odd-numbered LED's on the first half of the printhead and then the odd-numbered LED's on the second half of the printhead. Heating of the printer due to current pulsing of the LED's is minimized with this arrangement. In addition, the straightness of a printed line in the cross-track (main scanning) direction can be ensured since there will only be 1/2400" separation between a line of recorded sub-pixels formed in one-half of the printhead versus a line of sub-pixels recorded in a second half of the printhead. In the embodiment of FIGS. 2-6, a further advantage of mixing the enable times of the odd and even pixels results in better straightness compared with enabling one-half of the printhead at one time and then the second half at another time. Furthermore, the order of the sub-line exposures as indicated in FIG. 4, both for exposures in the in-track direction (successive exposures by one LED using say strobe line Enable 0) and cross-track direction will help the sub-pixels' process stability by intermixing high exposure sub-pixels with low exposure sub-pixels adjacent to it.

The strobe lines Enable 0, Enable 1 are fed to one input of a respective logic AND gate 126 associated with each LED. The other input of AND gate 126 is provided with a data bit from the latch register representing whether or not a sub-dot or sub-pixel is to be printed at this time. Assuming a sub-dot is to be printed, a respective LED is enabled for a time period predetermined by the strobe signal for that sub-line. In this regard, enablement of an LED 120 comprises driving of current through the LED by for example a transistor controlled current driver 199 of conventional circuitry to cause the LED to generate illumination.

The embodiment has also been illustrated with regard to a printhead having a plural number N of point-like recording elements (LED's) per inch exemplified by the N=300 dpi printhead described herein and a control for exposing M lines (M = 300 dpi) of grey level pixels per inch in the sub-scanning direction by use of L sub-lines, exemplified by L=8, for each grey level pixel. Thus, encoder signals are provided at the rate of 1/300 per inch and are further divided by the counter and controller 124 to 1/2400 per inch (1.64 x 10⁻⁴cm) of travel of the web 12 for recording P = L x M (2400 in this example) sub-lines per inch in the sub-scanning direction. One can even use coarser encoder pulses like 100 per inch and generate the finer pulses with a phase lock loop (PLL). The purpose is to reduce flutter by synchronization to get rid of the low freguency transport noise.

The exposure durations during the sub-lines for recording a grey level pixel are mixed between large and then followed by relatively shorter duration exposures which contribute to electrophotographic process stability. Thermal problems are minimized by reducing current requirements to the printhead through staggering of the enablement times during each sub-line exposure period. The duration of each sub-line exposure period is kept uniform to simplify the clocking of data to the printhead yet the duration of each sub-line exposure period is of relatively short duration. The advantages of grey level printing using an inexpensive binary printhead are thus inexpensively and efficiently realized and requirements for memory for formatting corrected data to the printhead are reduced.

The specific exposure times and resolution dimensions identified numerically are provided as exemplary and, of course, may be optimized for the appropriate printhead. As has been shown, exposure correction to compensate for non-uniformities in the LED's or drivers may be accomplished through modifying of data for each LED at each grey level. The advantages of process stability are attained even where the exposures for the sub-lines are concurrent.

While the invention has been illustrated in connection with an electrophotographic apparatus, other non-impact dot matrix printers such as thermal, electrographic, etc. may also make use of the invention described herein.

The encoder means may be of the type described herein, wherein each line of printing is "tracked" relative to actual photoconductor movement or wherein an encoder signal is "tracked" at the beginning of each frame and pulses artificially created for each line in accordance with approximate photoconductor movement. Alternatively, the encoder may provide pulses at each sub-line interval.

Still other variations may include the use of say 6-bits per pixel data with an addition of two color internal bits for cyan, magenta, yellow, black to form the 8-bits grey level input data so that one process look-up table can be used for all four colors in a color printer printing with those respective colored toners. A further extension may be the loading of the process look-up table with updated data based on changes in process conditions such as humidity which effects development of the electroscopic toners. This can be done, without changing the uniformity look-up table which is specific printhead-related and can be a plug in ROM. With the use of RAM type memories for the uniformity look-up table 118, changes can be made to it based on measured thermal gradients on the printhead. A further flexibility to the system described herein is that a different bit depth grey level value from 4-bits to 8-bits per pixel per color can be used, depending upon how much DRAM memory is provided for the framestore or page memory 146.

Still further modifications may include having all the driver chips to one side of the line of LED's and streaming data serially a single data bit at a time as described above but with the data bits for odd and even LED's being one right after the other. Two enable times are described above for enabling odd and even LED's separately in time could still be provided to limit current to the printhead. In such an example, each driver chip would have suitable circuitry for receiving two strobe enable lines, one for odd-numbered LED's and the other for even-numbered LED's driven by that driver chip. The advantage to this is in eliminating the extra 8 to 1 multiplexer as well as only requiring one set of uniformity and process look-up tables with need for only 8-bit latches.

The embodiment of FIGS. 2-6 may also be modified into a system where 32 bits rather than 16 are handled simultaneously. In such a case, the multiplexer would access data for high-numbered LED's odd and even and for low-numbered LED's odd and even in one 32-bit transfer rather than the 16-bit described herein.

The invention has been described in detail with particular reference to preferred embodiments thereof, but it will be understood that variations and modifications can be effected within the scope of the invention.

## Claims

1. A non-impact printing apparatus for recording, the apparatus comprising:
a plurality of recording elements;
first means coupled to each recording element for storing a data bit representing a portion of a pixel to be recorded by each recording element;
formatting means coupled to said first means for transmitting data bits to said first means,
buffer means for storing data representing the grey level of a first line of pixels to be recorded, each pixel being represented by a multibit data signal of n bits;
correction means for correcting said multibit data signal to a corrected multibit printing data signal;
means for selecting one bit from a corrected multibit printing data signal for transmission to said first means; and characterized by
wherein the buffer means is a retransmit buffer; and
control means for retransmitting the data from said retransmit buffer to said correction means only n times for each pixel to be recorded.

2. The apparatus of Claim 1 and wherein the correction means comprises a first look-up table memory means and the said multibit data signal serves as an address to said look-up table memory means.

3. The apparatus of Claim 2 and further including a second look-up table memory means for storing data representing characteristics of said recording elements and wherein the output of the second look-up table memory means is also input to said first look-up table memory means as an address.

4. The apparatus of Claim 2 or 3 and wherein the first look-up table memory means stores correction data, the correction data being in the form of a multibit signal representing the exposure time to be printed for a first input signal representing a grey level of a pixel to be exposed and for a second input signal representing a characteristic of the recording element that is to print that pixel.

5. The apparatus of Claim 4 and wherein the first look-up table memory means stores correction data in accordance with the color of the print to be printed.

6. The apparatus of any of Claims 1 through 5 and wherein each bit of data of the corrected multibit printing data signal and representing a portion of a pixel to be recorded is recorded during a sub-interval period of a pixel recording period and enabling means are provided for enabling said recording element during a portion of said sub-interval period and for enabling a different recording element during a different portion of said sub-interval period so that the recording elements are not enabled simultaneously.

7. The apparatus of Claim 6 and wherein said enabling means enables adjacent recording elements for recording so that they are not enabled simultaneously during a sub-interval recording period.

8. The apparatus of any of Claims 1 through 7 and including means for recording individual pixels over a plurality of separate recording sub-intervals in accordance with the bits of data in said corrected printing data signal.

9. A method for formatting data to a non-impact printhead for recording, the printhead having a plurality of recording elements, the method comprising the steps of:
(a) storing signals in a buffer representing the grey level of a line of pixels to be recorded, the pixels each being represented by a multibit binary data signal of n bits;
(b) outputting from the buffer the multibit signal representing a pixel grey level as one input to a correction means;
(c) generating a corrected multibit signal representing the time period for recording said pixel;
(d) selecting a single bit from said corrected multibit signal and transmitting the single bit to said printhead for recording;
and repeating steps (b) through (d) n times for each pixel in said line of pixels.

10. The method of Claim 9 and including the step of staggering recording durations during a sub-interval of recording pixels so that certain recording elements are not on simultaneously.

11. The method of Claims 9 or 10 and wherein the correction means stores correction data in accordance with the color of the print to be printed.

12. The method of any of Claims 9 through 11 and including the step of inputting a second multibit signal to said correction means representing a performance characteristic of a recording element.

## Patentansprüche

1. Berührungslose Druckvorrichtung zum Aufzeichnen, mit
- mehreren Aufzeichnungselementen;
- ersten, mit den jeweiligen Aufzeichnungselementen verbundenen Mitteln zum Speichern eines Datenbits, welches einen Teil eines durch jedes Aufzeichnungselement aufzuzeichnendes Pixels kennzeichnet;
- eine mit den ersten Mitteln verbundene Formatierungseinrichtung zum Überführen von Datenbits an die ersten Mittel;
- einem Pufferspeicher zum Speichern von Daten, welche die Graustufe einer ersten aufzuzeichnenden Pixelzeile kennzeichnen, wobei jedes Pixel durch ein Multibit-Datensignal von n Bit dargestellt wird;
- einer Korrektureinrichtung zum Korrigieren des Multibit-Datensignals in ein korrigiertes Multibit-Druckdatensignal;
- einem Mittel zum Auswählen eines Bits aus einem korrigierten Multibit-Druckdatensignal zum Überführen an die ersten Mittel;
**dadurch gekennzeichnet,** daß
- der Pufferspeicher ein Mehrfach-Auslesespeicher ist; und daß
- eine Steuereinrichtung vorgesehen ist, um das Übermitteln der Daten vom Mehrfach-Auslesespeicher zur Korrektureinrichtung nur n mal für jedes aufzuzeichnende Pixel zu wiederholen.

2. Vorrichtung nach Anspruch 1, dadurch gekennzeichnet, daß die Korrektureinrichtung eine erste Wertetabelle-Speichereinrichtung aufweist und das Multibit-Datensignal als Adresse für die Wertetabelle-Speichereinrichtung dient.

3. Vorrichtung nach Anspruch 2, gekennzeichnet durch eine zweite Wertetabelle-Speichereinrichtung zum Speichern von Daten, welche charakteristische Merkmale der Aufzeichnungselemente kennzeichnen, und dadurch, daß das Ausgangssignal der zweiten Wertetabelle-Speichereinrichtung auch als Adresse in die erste Wertetabelle-Speichereinrichtung eingegeben wird.

4. Vorrichtung nach Anspruch 2 oder 3, dadurch gekennzeichnet, daß die erste Wertetabelle-Speichereinrichtung Korrekturdaten speichert, wobei die Korrekturdaten die Form eines Multibitsignals aufweisen, welches die zu druckende Belichtungszeit kennzeichnet für ein erstes Eingangssignal, das eine Graustufe eines zu belichtenden Pixels darstellt, und für ein zweites Eingangssignal, das ein charakteristisches Merkmal des Aufzeichnungselements kennzeichnet, welches das Pixel drucken soll.

5. Vorrichtung nach Anspruch 4, dadurch gekennzeichnet, daß die erste Wertetabelle-Speichereinrichtung Korrekturdaten entsprechend der Farbe des zu druckenden Prints speichert.

6. Vorrichtung nach einem der Ansprüche 1 - 5, dadurch gekennzeichnet, daß jedes Datenbit des korrigierten Multibit-Druckdatensignals, das einen Teil eines aufzuzeichnenden Pixels kennzeichnet, während einer Teilintervall-Periode einer Pixelaufzeichnungsperiode aufgezeichnet wird, und daß Freigabemittel vorgesehen sind, welche das Aufzeichnungselement während eines Teils der Teilintervall-Periode und ein anderes Aufzeichnungselement während eines anderen Teils der Teilintervall-Periode freigeben, so daß die Aufzeichnungselemente nicht gleichzeitig freigegeben werden.

7. Vorrichtung nach Anspruch 6, dadurch gekennzeichnet, daß das Freigabemittel benachbarte Aufzeichnungselemente für die Aufzeichnung so freigibt, daß sie während einer Teilintervall-Aufzeichnungsperiode nicht gleichzeitig freigegeben werden.

8. Vorrichtung nach einem der Ansprüche 1 - 7, gekennzeichnet durch ein Mittel zum Aufzeichnen einzelner Pixel über mehrere getrennte Aufzeichnungs-Teilintervalle entsprechend der Datenbits in dem korrigierten Druckdatensignal.

9. Verfahren zum Formatieren von Daten zum Ansteuern eines berührungslosen, mehrere Aufzeichnungselemente aufweisenden Druckkopfes für die Aufzeichnung, wobei das Verfahren folgende Schritte umfaßt:
(a) Speichern von Signalen, die die Graustufe einer aufzuzeichnenden Pixelzeile kennzeichnen in einem Pufferspeicher, wobei jedes der Pixel durch ein Multibit-Binärdatensignal von n Bit gekennzeichnet ist;
(b) Auslesen des eine Pixelgraustufe kennzeichnenden Multibit-Signals aus dem Pufferspeicher als ein Eingangssignal in eine Korrektureinrichtung;
(c) Erzeugen eines korrigierten Multibit-Signals, welches die Zeitperiode zum Aufzeichnen des Pixels kennzeichnet;
(d) Auswählen eines einzelnen Bits aus dem korrigierten Multibit-Signal und Zuführen des einzelnen Bits zum Druckkopf für die Aufzeichnung; und Wiederholen der Schritte (b) - (d) n mal für jedes Pixel in der Pixelzeile.

10. Verfahren nach Anspruch 9, gekennzeichnet durch folgenden zusätzlichen Schritt.
- Staffeln der Aufzeichnungszeiten während eines Teilintervalls der Pixelaufzeichnung, so daß bestimmte Aufzeichnungselemente nicht gleichzeitig eingeschaltet sind.

11. Vorrichtung nach Anspruch 9 oder 10, dadurch gekennzeichnet, daß die Korrektureinrichtung Korrekturdaten entsprechend der Farbe des zu druckenden Prints speichert.

12. Vorrichtung nach einem der Ansprüche 9 - 11, gekennzeichnet durch folgenden zusätzlichen Schritt:
- Eingeben eines zweiten, eine Leistungscharakteristik eines Aufzeichnungselements darstellenden Multibit-Signals in die Korrektureinrichtung.

## Revendications

1. Appareil d'impression sans impact pour enregistrement, l'appareil comprenant :
une pluralité d'éléments d'enregistrement ;
un premier moyen couplé à chaque élément d'enregistrement pour mémoriser un bit de données représentant une partie d'un pixel qui doit être enregistrée par chaque élément d'enregistrement ;
un moyen de formatage couplé audit premier moyen pour transmettre les bits de données audit premier moyen,
une mémoire tampon pour mémoriser des données représentant le niveau de gris d'une première ligne de pixels qui doit être enregistrée, chaque pixel étant représenté par un signal de données multibits constitué de n bits ;
un moyen de correction pour corriger ledit signal de données multibits en un signal de données d'impression multibits corrigé ;
un moyen pour sélectionner un bit à partir d'un signal de données d'impression multibits corrigé pour transmission audit premier moyen ; et caractérisé
en ce que la mémoire tampon est une mémoire tampon de retransmission ; et
en ce qu'un moyen de commande retransmet les données à partir de ladite mémoire tampon de retransmission audit moyen de correction seulement n fois pour chaque pixel qui doit être enregistré.

2. Appareil selon la revendication 1 dans lequel le moyen de correction comprend une première mémoire de table de consultation et dans lequel ledit signal de données multibits sert d'adresse à ladite mémoire de table de consultation.

3. Appareil selon la revendication 2 comprenant en outre une seconde mémoire de table de consultation pour mémoriser des données représentant des caractéristiques desdits éléments d'enregistrement et dans lequel la sortie de la seconde mémoire de table de consultation est également entrée dans ladite première mémoire de table de consultation comme une adresse.

4. Appareil selon la revendication 2 ou 3 dans lequel la première mémoire de table de consultation mémorise des données de correction, les données de correction étant sous la forme d'un signal multibits représentant le temps d'exposition qui doit être imprimé pour un premier signal d'entrée représentant un niveau de gris d'un pixel qui doit être exposé et pour un second signal d'entrée représentant une caractéristique de l'élément d'enregistrement qui doit imprimer ce pixel.

5. Appareil selon la revendication 4 dans lequel la première mémoire de table de consultation mémorise des données de correction en conformité avec la couleur de l'impression qui doit être imprimée.

6. Appareil selon l'une quelconque des revendications 1 à 5 dans lequel chaque bit de données du signal de données d'impression multibits corrigé et représentant une partie d'un pixel qui doit être enregistrée est enregistré pendant une période de sous-intervalle d'une période d'enregistrement de pixel et dans lequel un moyen d'activation est prévu pour activer ledit élément d'enregistrement pendant une partie de ladite période de sous-intervalle et pour activer un élément d'enregistrement différent pendant une partie différente de ladite période de sous-intervalle de sorte que les éléments d'enregistrement ne soient pas activés simultanément.

7. Appareil selon la revendication 6 dans lequel ledit moyen d'activation active des éléments d'enregistrement adjacents pour enregistrement de sorte qu'ils ne soient pas activés simultanément pendant une période d'enregistrement de sous-intervalle.

8. Appareil selon l'une quelconque des revendications 1 à 7 incluant un moyen pour enregistrer des pixels individuels sur une pluralité de sous-intervalles d'enregistrement séparés en conformité avec les bits de données dans ledit signal de données d'impression corrigé.

9. Procédé de formatage de données pour une tête d'impression sans impact pour enregistrement, la tête d'impression comportant une pluralité d'éléments d'enregistrement, le procédé comprenant les étapes :
(a) mémoriser des signaux dans une mémoire tampon représentant le niveau de gris d'une ligne de pixels qui doit être enregistrée, chaque pixel étant représenté par un signal de données binaire multibits constitué de n bits ;
(b) extraire de la mémoire tampon le signal multibits représentant un niveau de gris de pixel comme une entrée dans un moyen de correction ;
(c) générer un signal multibits corrigé représentant la période de temps pour enregistrement dudit pixel ;
(d) sélectionner un seul bit à partir dudit signal multibits corrigé et transmettre le seul bit à ladite tête d'impression pour enregistrement ;
et répéter les étapes (b) à (d) n fois pour chaque pixel dans ladite ligne de pixels.

10. Procédé selon la revendication 9 incluant l'étape consistant à décaler les durées d'enregistrement pendant un sous-intervalle de pixels d'enregistrement de sorte que certains éléments d'enregistrement ne soient pas activés simultanément.

11. Procédé selon les revendications 9 ou 10 dans lequel le moyen de correction mémorise des données de correction en conformité avec la couleur de l'impression qui doit être imprimée.

12. Procédé selon l'une quelconque des revendications 9 à 11 incluant l'étape consistant à entrer un second signal multibits dans ledit moyen de correction représentant une caractéristique de performance d'un élément d'enregistrement.
